(19) Europäisches Patentamt
European Patent Office
Office européen des brevets

(11) **EP 4 620 777 A1**

(12) **EUROPÄISCHE PATENTANMELDUNG**

(43) Veröffentlichungstag:
**24.09.2025 Patentblatt 2025/39**

(21) Anmeldenummer: **24164692.6**

(22) Anmeldetag: **20.03.2024**

(51) Internationale Patentklassifikation (IPC):
**B61L 29/30** (2006.01)    **B61L 23/04** (2006.01)

(52) Gemeinsame Patentklassifikation (CPC):
**B61L 29/30; B61L 23/041**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Mobility GmbH**
**81739 München (DE)**

(72) Erfinder: **Braband, Jens**
**38106 Braunschweig (DE)**

(74) Vertreter: **Siemens Patent Attorneys**
**Postfach 22 16 34**
**80506 München (DE)**

(54) **EINRICHTUNG UND VERFAHREN ZUM ÜBERWACHEN EINES BAHNÜBERGANGS**

(57) Die Erfindung bezieht sich unter anderem auf ein Verfahren zum Überwachen eines Bahnübergangs (10), dessen von Schienenfahrzeugen (60) befahrbarer Gleisanlagenbereich (20) von Objekten (30, 31) entlang einer Passierrichtung (P) überquerbar ist. Erfindungsgemäß ist vorgesehen, dass ein entlang der Passierrichtung (P) vor dem Gleisanlagenbereich (20) liegender erster Absicherungsbereich (11) auf Passierereignisse hin überwacht wird, ein entlang der Passierrichtung (P) hinter dem Gleisanlagenbereich (20) liegender zweiter Absicherungsbereich (12) auf Passierereignisse hin überwacht wird, und zumindest ein Warnsignal (W) erzeugt wird, wenn die erkannten Passierereignisse gemäß zumindest einer vorgegebenen Plausibilitätsprüfung unplausibel sind.

FIG 9

EP 4 620 777 A1

**Beschreibung**

Die Erfindung bezieht sich auf Einrichtungen und Verfahren zum Überwachen eines Bahnübergangs.

Bahnübergänge mit (Voll-)Schranken werden üblicherweise von Personal oder mit Radarscannern überwacht, die eine Sicherheitszulassung gemäß SIL3 benötigen. Bei einfacheren Betriebsverhältnissen sind auch Lösungen wie ein zeitgesteuertes Schließen nach einem Warnhinweis (Anrufschranke nach DB RIL 456.0001) zulässig.

Der Erfindung liegt die Aufgabe zugrunde, ein Verfahren zum Überwachen eines Bahnübergangs anzugeben, das allein zum Überwachen des Bahnübergangs eingesetzt werden kann und/oder in Ergänzung eines anderen Verfahrens zu dessen zusätzlicher Absicherung dienen kann.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass ein entlang einer vorgegebenen Passierrichtung vor dem Gleisanlagenbereich liegender erster Absicherungsbereich auf Passierereignisse hin überwacht wird, ein entlang der Passierrichtung hinter dem Gleisanlagenbereich liegender zweiter Absicherungsbereich auf Passierereignisse hin überwacht wird, und zumindest ein Warnsignal erzeugt wird, wenn die erkannten Passierereignisse gemäß zumindest einer vorgegebenen Plausibilitätsprüfung unplausibel sind.

Ein wesentlicher Vorteil des erfindungsgemäßen Verfahrens ist darin zu sehen, dass dieses auf einer Überwachung von Bereichen außerhalb des Gleisanlagenbereichs des Bahnübergangs beruht; das erfindungsgemäße Verfahren kann somit beispielsweise in Ergänzung zu anderen bereits vorhandenen Überwachungsverfahren eingesetzt werden, die eine Überwachung eben dieses Gleisanlagenbereichs vornehmen.

Die Erkennung der Passierereignisse kann besonders einfach und damit vorteilhaft durch ein Auswerten von Bildern erfolgen, beispielsweise ein rechnergestütztes Auswerten von Digitalbildern, die von einer oder mehreren Videokameras aufgenommen werden. Ein rechnergestütztes Auswerten kann beispielsweise auf künstlicher Intelligenz basieren. Eine Entscheidung, ob eine Objekterkennung erfolgt, kann beispielsweise auch zusätzliche Informationen und Bewertungsverfahren wie das Bayes'sche Verfahren einbinden.

Vorteilhaft ist es, wenn im Rahmen der Plausibilitätsprüfung oder einer der Plausibilitätsprüfungen als das Warnsignal ein Zählerstandswarnsignal erzeugt wird, wenn zu einem vorgegebenen Prüfzeitpunkt die Anzahl der erkannten Passierereignisse des ersten Absicherungsbereichs von der Anzahl der erkannten Passierereignisse des zweiten Absicherungsbereichs abweicht.

So wird es beispielsweise als vorteilhaft angesehen, wenn im Rahmen der Plausibilitätsprüfung oder einer der Plausibilitätsprüfungen die Passierereignisse jeweils gezählt werden unter Bildung eines ersten Zählerstands, der die Anzahl der Passierereignisse des ersten Absicherungsbereichs angibt, und eines zweiten Zählerstands, der die Anzahl der Passierereignisse des zweiten Absicherungsbereichs angibt, und als das Warnsignal ein Zählerstandswarnsignal erzeugt wird, wenn zu dem vorgegebenen Prüfzeitpunkt die Differenz zwischen dem ersten Zählerstand und dem zweiten Zählerstand ungleich Null ist.

Die Zählerstände können beispielsweise vor einer jeden Öffnung des Bahnübergangs bzw. einer jeden Freigabe zum Passieren des Bahnübergangs jeweils auf Null gesetzt werden.

Der vorgegebene Prüfzeitpunkt kann ein beliebiger Zeitpunkt sein, zu dem der Bereich zwischen den beiden Absicherungsbereichen, also der Gefahrenbereich bzw. der befahrbare Gleisanlagenbereich, von einer anderen Gleisanlagenüberwachung als leer gemeldet wird.

Auch kann vorgesehen sein, dass der vorgegebene Prüfzeitpunkt ein Zeitpunkt ist, der vor einem erwarteten oder geplanten Befahren des Gleisanlagenbereichs durch ein Schienenfahrzeug liegt. Besonders vorteilhaft ist es, wenn der vorgegebene Prüfzeitpunkt ein Zeitpunkt nach einem Schließen einer Schranke des Bahnübergangs ist und/oder ein Zeitpunkt nach einer ein Passierverbot des Bahnübergangs anzeigenden Verbotsanzeige ist. Zu einem solchen Prüfzeitpunkt sollte bzw. muss der Bahnübergang leer sein; es müssen also alle Objekte, die in den Gefahrenbereich hineingelangt sind, diesen auch wieder verlassen haben, sodass die Differenz zwischen dem o. g. ersten Zählerstand und dem o. g. zweiten Zählerstand Null betragen muss.

Wenn der Bahnübergang bestimmungsgemäß entlang der Passierrichtung und entgegen der Passierrichtung überquerbar ist, so können im Rahmen der Plausibilitätsprüfung oder einer der

Plausibilitätsprüfungen die Passierereignisse jeweils richtungsabhängig gezählt werden und es kann als das Warnsignal ein Zählerstandswarnsignal erzeugt werden, wenn zu dem vorgegebenen Prüfzeitpunkt die Anzahl der Objekte, die sich in Richtung auf den Gleisanlagenbereich bewegt haben, von der Anzahl der Objekte, die sich von dem Gleisanlagenbereich wegbewegt haben, abweicht.

Beispielsweise können im Rahmen der Plausibilitätsprüfung oder einer der Plausibilitätsprüfungen die Passierereignisse jeweils richtungsabhängig gezählt werden, und zwar unter Bildung eines ersten Zählerstands, der die Anzahl der Passierereignisse des ersten Absicherungsbereichs entlang der Passierrichtung angibt, eines weiteren ersten Zählerstands, der die Anzahl der Passierereignisse des ersten Absicherungsbereichs entgegen der Passierrichtung angibt, eines zweiten Zählerstands, der die Anzahl der Passierereignisse des zweiten Absicherungsbereichs entlang der Passierrichtung angibt, eines weiteren zweiten Zählerstands, der die Anzahl der Passierereignisse des zweiten Absicherungsbereichs entgegen der Passierrichtung angibt. Als das Warnsignal kann in einem solchen Fall ein Zählerstandswarnsignal erzeugt werden, wenn zu dem vorgegebenen Prüfzeitpunkt die Differenz zwischen dem ersten Zählerstand und dem zweiten Zählerstand ungleich Null ist und/oder die Differenz zwischen dem ersten weiteren und dem zweiten weiteren Zählerstand ungleich Null ist.

Um eine von einer Überwachung des Gefahrenbereichs, also des von Schienenfahrzeugen befahrbaren Gleisbereichs, unabhängige Überwachung des Bahnübergangs durchführen zu können, wird es als vorteilhaft angesehen, wenn sich der erste Absicherungsbereich zwischen dem Gleisanlagenbereich und einer entlang der Passierrichtung gesehen vor dem Gleisanlagenbereich befindlichen Schranke oder Sperrmarkierung befindet und sich der zweite Absicherungsbereich zwischen dem Gleisanlagenbereich und einer entlang der Passierrichtung gesehen hinter dem Gleisanlagenbereich befindlichen Schranke oder Sperrmarkierung befindet. Ist der Bahnübergang gesperrt, weil eine Durchfahrt eines Schienenfahrzeuges bevorsteht, so muss der Bereich zwischen dem befahrbaren Gleisbereich und den Schranken bzw. der Sperrmarkierung frei sein.

Alternativ oder zusätzlich kann die Überwachung des Bahnübergangs vorsehen, dass für jedes den ersten Absicherungsbereich passierende Objekt jeweils die Passiergeschwindigkeit ermittelt wird, anhand der ermittelten Geschwindigkeit ein Zeitfenster berechnet wird, in dem ein Passierereignis des zweiten Absicherungsbereichs erfasst werden müsste, und als das Warnsignal ein Fehlersignal erzeugt wird, wenn innerhalb des Zeitfensters kein Passierereignis des zweiten Absicherungsbereichs erfasst wird; denn ein Ausbleiben der Erfassung des zweiten Passierereignisses deutet auf einen Fehler in der Objekterkennung hin, sei es bezüglich eines angeblichen Einfahrereignisses, das womöglich nicht stattgefunden hat, oder des zu erwartenden Ausfahrereignisses, das nicht registriert wurde.

Alternativ oder zusätzlich kann die Überwachung des Bahnübergangs vorsehen, dass im Rahmen der Plausibilitätsprüfung oder einer der Plausibilitätsprüfungen als das Warnsignal ein Fehlersignal erzeugt wird, wenn die Differenz zwischen der Anzahl der im ersten und zweiten Absicherungsbereich erkannten Passierereignisse eine vorgegebene Schwelle überschreitet. Die letztgenannte Plausibilitätsprüfung geht von dem Gedanken aus, dass der Platz im Bereich des Bahnübergangs begrenzt ist und aus diesem Grunde nicht beliebig viele Objekte zwischen den beiden Absicherungsbereichen vorhanden sein können. Die Schwelle liegt vorzugsweise bei einem Wert zwischen 5 und 10.

Auch kann vorgesehen sein, dass der Bahnübergang für die Überquerung des Gleisanlagenbereichs entlang der Passierrichtung zumindest eine erste Passierspur und für die Überquerung des Gleisanlagenbereichs entgegen der Passierrichtung zumindest eine zweite Passierspur aufweist, In einem solchen Falle kann in vorteilhafter Weise vorgesehen sein, dass der erste und zweite Absicherungsbereich der ersten Passierspur zugeordnet ist, ein dritter Absicherungsbereich der zweiten Passierspur zugeordnet ist, entgegen der Passierrichtung vor dem Gleisanlagenbereich liegt und auf Passierereignisse hin überwacht wird, ein vierter Absicherungsbereich der zweiten Passierspur zugeordnet ist, entgegen der Passierrichtung hinter dem Gleisanlagenbereich liegt und auf Passierereignisse hin überwacht wird, und zumindest ein Warnsignal erzeugt wird, wenn die erkannten Passierereignisse gemäß zumindest einer vorgegebenen Plausibilitätsprüfung unplausibel sind.

Bei der letztgenannten Variante ist es vorteilhaft, wenn im Rahmen der Plausibilitätsprüfung oder einer der Plausibilitätsprüfungen die Passierereignisse gezählt werden unter Bildung eines dritten Zählerstands, der die Anzahl der Passierereignisse des dritten Absicherungsbereichs angibt, und eines vierten Zählerstands, der die Anzahl der Passierereignisse des vierten Absicherungsbereichs angibt, und als das Warnsignal ein Zählerstandswarnsignal erzeugt wird, wenn zu dem vorgegebenen Prüfzeitpunkt die Differenz zwischen dem dritten Zählerstand und dem vierten Zählerstand ungleich Null ist.

Alternativ oder zusätzlich kann vorgesehen sein, dass für jedes den dritten Absicherungsbereich passierende Objekt jeweils die Passiergeschwindigkeit ermittelt wird, anhand der ermittelten Geschwindigkeit ein Zeitfenster berechnet wird, in dem ein Passierereignis des vierten Absicherungsbereichs erfasst werden müsste, und als das Warnsignal ein Fehlersignal erzeugt wird, wenn innerhalb des Zeitfensters kein Passierereignis des vierten Absicherungsbereichs erfasst wird.

Alternativ oder zusätzlich kann vorgesehen sein, dass im Rahmen der Plausibilitätsprüfung oder einer der Plausibilitätsprüfungen als das Warnsignal ein Fehlersignal erzeugt wird, wenn die Differenz zwischen dem dritten und dem vierten Zählerstand eine vorgegebene Schwelle überschreitet.

Bezüglich der Anordnung der Bereiche ist es vorteilhaft, wenn sich der dritte Absicherungsbereich zwischen dem Gleisanlagenbereich und einer in der Passierrichtung hinter dem Gleisanlagenbereich befindlichen Schranke oder Sperrmarkierung befindet und sich der vierte Absicherungsbereich zwischen dem Gleisanlagenbereich und einer in der Passierrichtung vor dem Gleisanlagenbereich befindlichen Schranke oder Sperrmarkierung befindet.

Wie bereits eingangs angedeutet, kann die Überwachung der Absicherungsbereiche mit einer Überwachung des Gefahrenbereichs kombiniert werden. Demgemäß wird es als vorteilhaft angesehen, wenn der von Schienenfahrzeugen befahrbare Gleisanlagenbereich im Rahmen einer Gefahrenbereichsüberwachung überwacht wird und die Überwachung des ersten und zweiten Absicherungsbereichs zum Zwecke der Absicherung der Gefahrenbereichsüberwachung durchgeführt wird, wobei bei Vorliegen einer Freimeldung des Gleisanlagenbereichs im Rahmen der Gefahrenbereichsüberwachung ein Überprüfungssignal erzeugt wird, wenn das oder zumindest eines der Warnsignale erzeugt worden ist.

Die Erfindung bezieht sich außerdem auf eine Überwachungseinrichtung zum Durchführen eines Verfahrens, insbesondere eines solchen wie oben beschrieben, zum Überwachen eines Bahnübergangs, dessen von Schienenfahrzeugen befahrbarer Gleisanlagenbereich von Objekten entlang einer vorgegebenen Passierrichtung passierbar ist. Bezüglich einer solchen Überwachungseinrichtung ist erfindungsgemäß vorgesehen, dass die Überwachungseinrichtung aufweist: eine Bildaufnahmeeinrichtung, die Bilder eines entlang der Passierrichtung vor dem Gleisanlagenbereich liegenden ersten Absicherungsbereichs und Bilder eines entlang der Passierrichtung hinter dem Gleisanlagenbereich liegenden zweiten Absicherungsbereichs erzeugt, und eine mit der Bildaufnahmeeinrichtung in Verbindung stehende Bildauswerteinrichtung, die dazu ausgebildet ist, die den ersten und zweiten Absicherungsbereich zeigenden Bilder jeweils auf Passierereignisse hin zu überwachen und zumindest ein Warnsignal zu erzeugen, wenn die erkannten Passierereignisse gemäß zumindest einer vorgegebenen Plausibilitätsprüfung unplausibel sind.

Bezüglich der Vorteile der erfindungsgemäßen Überwachungseinrichtung und vorteilhafter Ausgestaltungen der erfindungsgemäßen Überwachungseinrichtung sei auf die obigen Ausführungen im Zusammenhang mit dem erfindungsgemäßen Verfahren und dessen vorteilhafter Ausgestaltungen verwiesen.

Vorteilhaft ist es, wenn die Bildauswerteinrichtung eine Recheneinrichtung aufweist, die mit einem Computerprogrammprodukt programmiert ist, das Programmbefehle umfasst, die bei Ausführung durch die Recheneinrichtung diese veranlassen, die Bilder auszuwerten und die zumindest eine vorgegebene Plausibilitätsprüfung durchzuführen.

Die Erfindung bezieht sich außerdem auf ein Computerprogrammprodukt, insbesondere für eine Bildauswerteinrichtung. Bezüglich des Computerprogrammprodukts ist erfindungsgemäß vorgesehen, dass dieses Programmbefehle umfasst, die bei Ausführung durch eine Recheneinrichtung diese veranlassen, Bilder, die einen ersten und zweiten Absicherungsbereich eines Bahnübergangs zeigen, jeweils auf Passierereignisse zu überwachen und zumindest ein Warnsignal zu erzeugen, wenn die erkannten Passierereignisse gemäß zumindest einer vorgegebenen Plausibilitätsprüfung unplausibel sind. Bezüglich der Vorteile des erfindungsgemäßen Computerprogrammprodukts und vorteilhafter Ausgestaltungen des erfindungsgemäßen Computerprogrammprodukts sei auf die obigen Ausführungen im Zusammenhang mit dem erfindungsgemäßen Verfahren und dessen vorteilhafter Ausgestaltungen verwiesen.

Die Erfindung wird nachfolgend anhand von Ausführungsbeispielen näher erläutert; dabei zeigen beispielhaft:

Fig. 1-10 Bahnübergänge, anhand derer Ausführungsbeispiele für erfindungsgemäße Verfahren zum Überwachen von Bahnübergängen erläutert werden, und

Fig. 11-13 Ausführungsbeispiele für erfindungsgemäße Überwachungseinrichtungen, die zum Durchführen erfindungsgemäßer Verfahren geeignet sind.

In den Figuren werden der Übersicht halber für identische oder vergleichbare Komponenten stets dieselben Bezugszeichen verwendet.

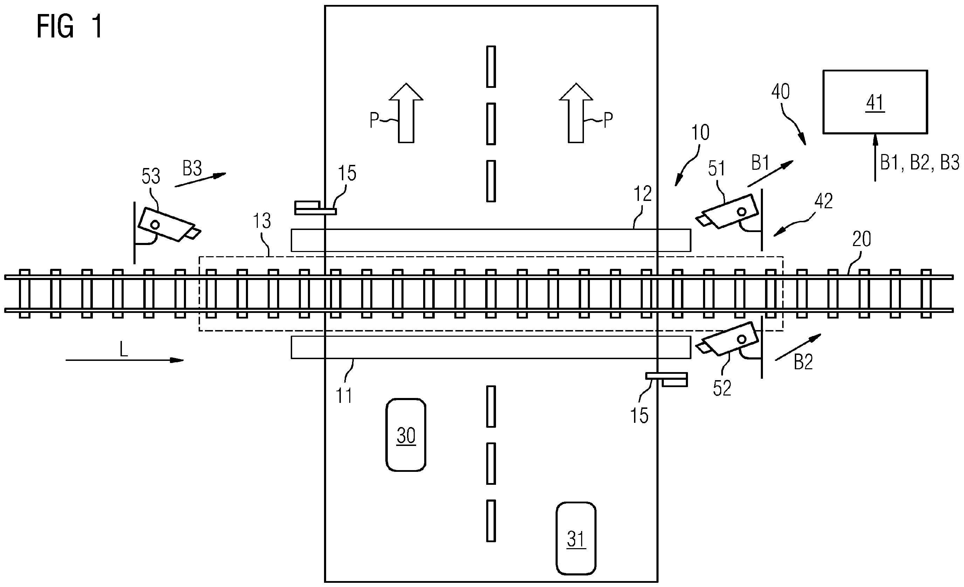

Die Figur 1 zeigt einen Bahnübergang 10 mit einem Gleisanlagenbereich 20, der von aus Gründen der Übersicht nicht dargestellten Schienenfahrzeugen befahrbar ist. Der Gleisanlagenbereich 20 ist von Objekten 30 und 31, wie beispielsweise Personen, Personenkraftwagen, LKW, Fahrrädern, usw., überquerbar, die sich quer, beispielsweise rechtwinklig, zur Schienenlängsrichtung L der Schienen des Gleisanlagenbereichs 20 bewegen.

In der Figur 1 ist beispielhaft mit Pfeilen eine quer zur Schienenlängsrichtung L orientierte Passierrichtung P markiert, entlang derer sich zwei auf einer zweispurigen Einbahnstraße fahrende Objekte 30 und 31 in Richtung auf den Bahnübergang 10 zubewegen, um diesen zu überqueren. Zu dem in der Figur 1 gezeigten Zeitpunkt sind Schranken 15 des Bahnübergangs 10 geöffnet, sodass die Objekte 30 und 31 den Bahnübergang 10 überqueren bzw. passieren können.

Zur Überwachung des Bahnübergangs 10 ist eine Überwachungseinrichtung 40 vorgesehen, die eine Bildauswerteinrichtung 41 und eine Bildaufnahmeeinrichtung 42 umfasst. Die Bildauswerteinrichtung 41 empfängt Bilder der Bildaufnahmeeinrichtung 42 und wertet diese zum Zwecke der Objekterkennung aus. Zur Objekterkennung kann die Bildauswerteinrichtung 41 allgemein zugängliche Objekterkennungssoftware nutzen, beispielsweise solche, die auf eine Objekterkennung trainierte künstliche Intelligenz einsetzt.

Bei dem Ausführungsbeispiel gemäß Figur 1 weist die Bildaufnahmeeinrichtung 42 drei Kameras 51-53 auf, von denen eine erste Kamera 51 einen dem Bahnübergang 10 zugeordneten ersten Absicherungsbereich 11 überwacht und diesen ersten Absicherungsbereich 11 zeigende Bilder B1 erzeugt, eine zweite Kamera 52 einen dem Bahnübergang 10 zugordneten zweiten Absicherungsbereich 12 überwacht und diesen zweiten Absicherungsbereich 12 zeigende Bilder B2 erzeugt und eine dritte Kamera 53 einen Gefahrenbereich 13 des Bahnübergangs 10 überwacht und diesen Gefahrenbereich 13 zeigende Bilder B3 erzeugt. Der Gefahrenbereich 13 umfasst den Abschnitt der Gleisanlage, der von den Schienenfahrzeugen im Bereich des Bahnübergangs 10 befahren wird und daher komplett geräumt sein muss, bevor die Schienenfahrzeuge den Bahnübergang 10 befahren dürfen.

Der erste Absicherungsbereich 11 liegt bei dem Ausführungsbeispiel gemäß Figur 1 außerhalb des Gefahrenbereichs 13, und zwar entlang der Passierrichtung P gesehen vor dem Gefahrenbereich 13. Der zweite Absicherungsbereich 12 liegt bei dem Ausführungsbeispiel gemäß Figur 1 ebenfalls außerhalb des Gefahrenbereichs 13, und zwar entlang der Passierrichtung P gesehen hinter dem Gefahrenbereich 13.

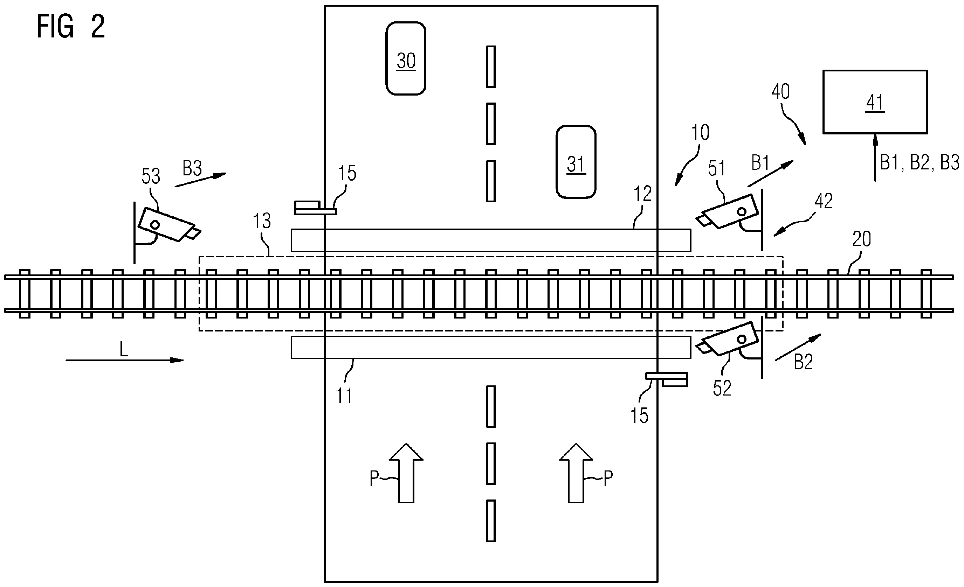

Die Figur 2 zeigt den Bahnübergang 10 gemäß Figur 1 zu einem späteren Zeitpunkt, zu dem die beiden Objekte 30 und 31 den Bahnübergang 10 bereits passiert haben.

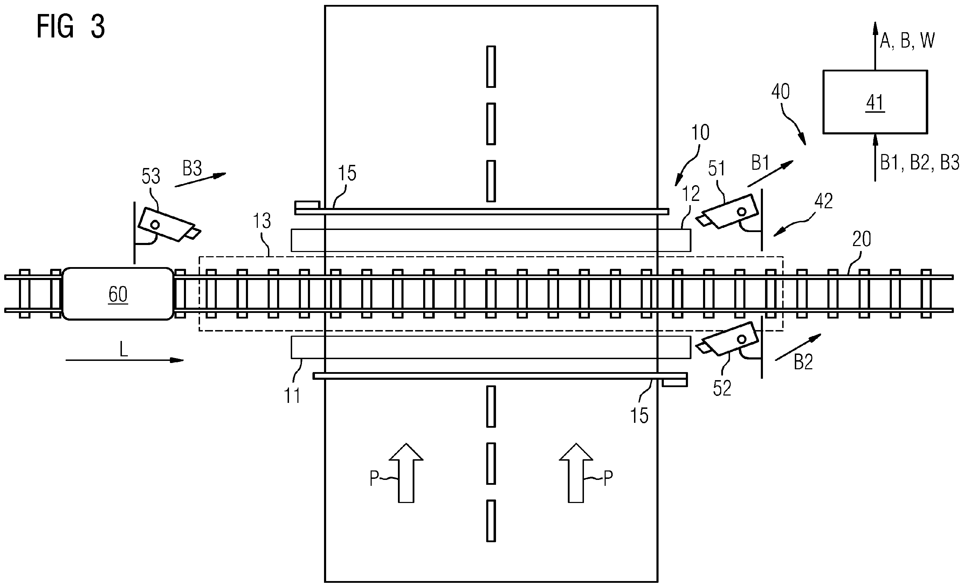

Die Figur 3 zeigt den Bahnübergang 10 gemäß den Figuren 1 und 2 zu einem noch späteren Zeitpunkt, zu dem die Schranken 15 des Bahnübergangs 10 geschlossen sind und ein Einfahren eines Schienenfahrzeugs 60 bevorsteht. Es lässt sich erkennen, dass der erste und zweite Absicherungsbereich 11 und 12 jeweils zwischen einer der Schranken 15 und dem Gefahrenbereich 13 liegen.

Der Bahnübergang 10 bzw. die Überwachungseinrichtung 40 werden vorzugsweise wie folgt betrieben: Solange der Bahnübergang 10 geöffnet ist bzw. ein Überqueren des Bahnübergangs 10 erlaubt ist, überwacht die Überwachungseinrichtung 40 den ersten und zweiten Absicherungsbereich 11 und 12 jeweils auf Überfahrereignisse, indem sie die Bilder B1 und B2 der ersten und zweiten Kamera 51 und 52 auswertet. Die Bildauswertung umfasst dabei das Erkennen von Objekten wie beispielsweise den Objekten 30 und 31. Nachfolgend wird beispielhaft davon ausgegangen, dass der Bahnübergang 10 bestimmungsgemäß lediglich entlang der mit dem Pfeil markierten Passierrichtung P passiert werden soll.

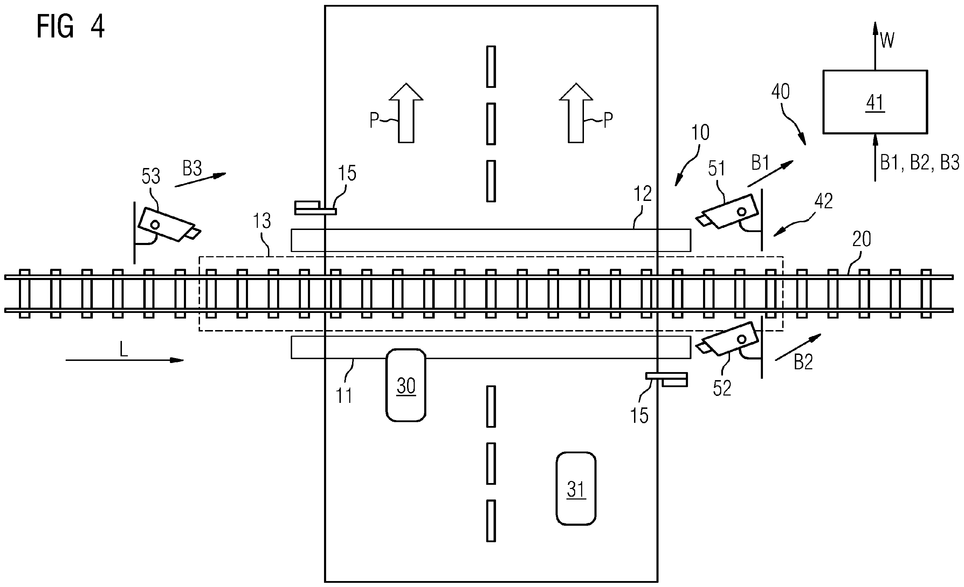

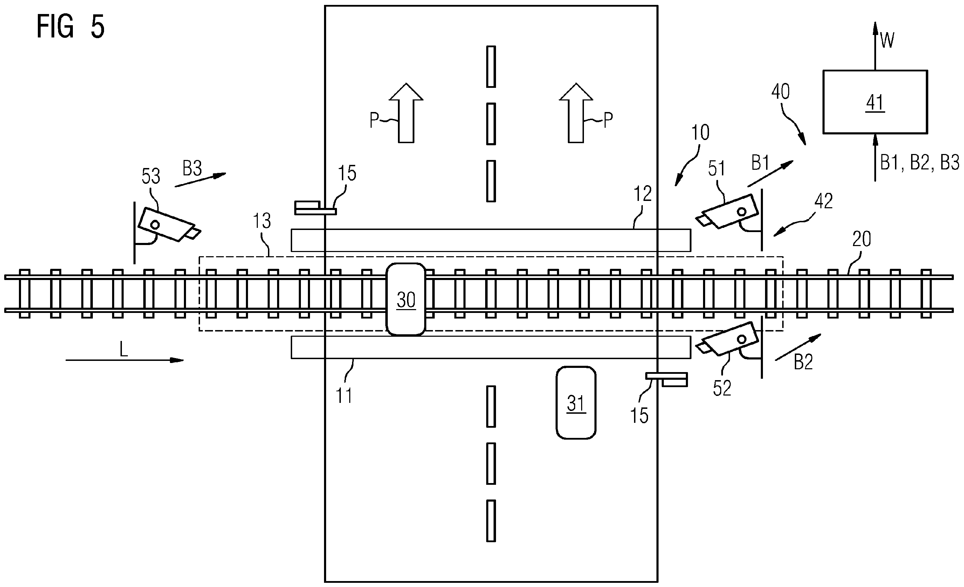

In einem solchen Fall ist es ausreichend, wenn die Überwachungseinrichtung 40 jeweils ein Überfahrereignis im ersten Absicherungsbereich 11 und damit ein Einfahrereignis in den Bahnübergang 10 erfasst, wenn sie zu einem Einfahrzeitpunkt ein Objekt (siehe zum Beispiel Objekt 30 in Figur 4) in dem ersten Absicherungsbereich 11 erfasst und zu einem späteren Ausfahrzeitpunkt (siehe Figur 5) das entsprechende Objekt 30 in dem ersten Absicherungsbereich 11 nicht mehr erkennt. In entsprechender Weise kann die Überwachungseinrichtung 40 alle in den Bahnübergang 10 hineingelangenden Objekte erfassen und unter Bildung eines ersten Zählerstands zählen, der die Anzahl der Passierereignisse des ersten Absicherungsbereichs 11 und damit der in den Gefahrenbereich 13 hineingefahrenen Objekte angibt.

Die Überwachungseinrichtung 40 zählt ein Überfahrereignis bzw. ein Einfahrereignis vorzugsweise jeweils dann, wenn das zuvor erkannte Objekt 30 den ersten Absicherungsbereich 11 wieder verlassen hat. Da bei dem Ausführungsbeispiel gemäß den Figuren 1 bis 5 beispielhaft von einem Einbahnstraßenbetrieb ausgegangen wird, ist eine Richtungserkennung der Bewegung der erkannten Objekte 30 und 31 hier nicht erforderlich.

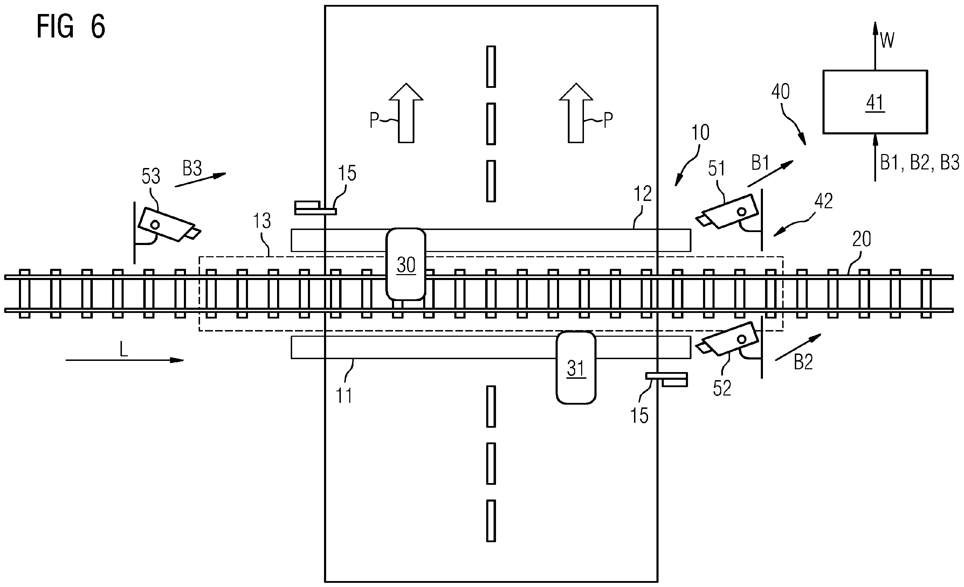

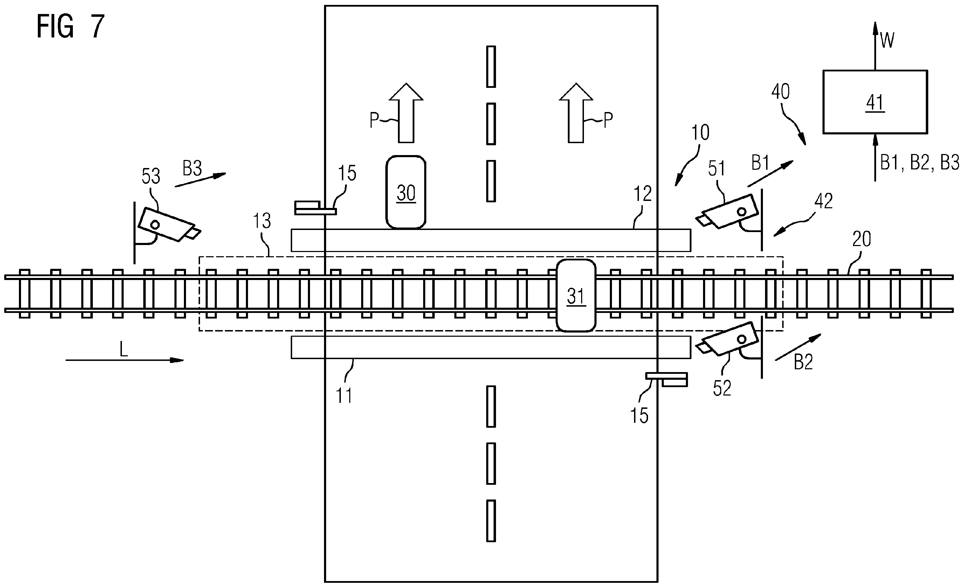

In analoger Weise kann die Überwachungseinrichtung 40 jeweils ein Überfahrereignis im zweiten Absicherungsbereich 12 und damit ein Ausfahrereignis aus dem Bahnübergang 10 erfassen, wenn sie zu einem Zeitpunkt ein Objekt (siehe Objekt 30 in Figur 6) in dem zweiten Absicherungsbereich 12 erfasst und zu einem nachfolgenden späteren Ausfahrzeitpunkt (siehe Figur 7) das entsprechende Objekt 30 in dem zweiten Absicherungsbereich 12 nicht mehr erkennt.

In entsprechender Weise kann die Überwachungseinrichtung 40 alle aus dem Bahnübergang 10 herausfahrenden Objekte erfassen und unter Bildung eines zweiten Zählerstands zählen, der die Anzahl der Passierereignisse des zweiten Absicherungsbereichs 12 und damit die Anzahl derjenigen Objekte angibt, die den Gefahrenbereich 13 wieder verlassen haben. Die Überwachungseinrichtung 40 zählt hier ein Überfahrereignis bzw. ein Ausfahrereignis vorzugsweise ebenfalls jeweils dann, wenn das zuvor erkannte Objekt den zweiten Absicherungsbereich 12 wieder verlassen hat. Da bei dem Ausführungsbeispiel gemäß den Figuren 1 bis 7 beispielhaft von einem Einbahnstraßenbetrieb ausgegangen wird, ist eine Richtungserkennung der Bewegung der erkannten Objekte auch bei der Ausfahrerkennung nicht erforderlich.

Wieder bezugnehmend auf die Figur 3, die den Bahnübergang 10 mit geschlossenen Schranken 15 und vor einem Einfahren des Schienenfahrzeugs 60 zeigt, kann die Überwachungseinrichtung 40 nach erfolgtem Schrankenschluss anhand der Bilder B3 der dritten Kamera 53, die den Gefahrenbereich 13 zeigen, prüfen, ob sich ein oder mehr Objekte in dem Gefahrenbereich 13 befinden. Ist dies der Fall, so erzeugt die Überwachungseinrichtung 40 ein Alarmsignal A, mit dem beispielsweise eine Einfahrt des Schienenfahrzeugs 60 in den Gefahrenbereich 13 gestoppt wird oder eine andere Sicherungsmaßnahme ausgelöst wird.

Kann die Überwachungseinrichtung 40 anhand der den Gefahrenbereich 13 zeigenden Bilder B3 der dritten Kamera 53 keine Objekte in dem Gefahrenbereich 13 erkennen, so prüft sie zum Zweck einer weiteren Absicherung des Fahrbetriebs den ersten Zählerstand, der die gezählten Einfahrereignisse in den Gefahrenbereich 13 angibt, und den zweiten Zählerstand, der die gezählten Ausfahrereignisse aus dem Gefahrenbereich 13 angibt. Falls sich tatsächlich keine Objekte in dem Gefahrenbereich 13 befinden, muss die Differenz zwischen den beiden Zählerständen Null betragen; ist dies - wie in der Figur 3 gezeigt - der Fall, so kann die Überwachungseinrichtung 40 ein Bestätigungssignal BS erzeugen, das ein Freisein des Gefahrenbereichs 13 explizit bestätigt.

Beträgt der Zählerstand zu diesem Zeitpunkt jedoch nicht Null, so liegt ein Fehler vor, sei es, dass die Gefahrenbereichsüberwachung bzw. die Auswertung der den Gefahrenbereich 13 zeigenden Bilder B3 versagt hat oder die als Stützmaßnahme zusätzlich vorgenommene Überwachung der Absicherungsbereiche 11 und 12 ein falsches Ergebnis ermittelt hat. In einem solchen Fall erzeugt die Überwachungseinrichtung 40 vorzugsweise ein Warnsignal W, das anzeigt, dass eine unplausible Objekterkennung stattgefunden hat, und eine Sicherungsmaßnahme auslöst.

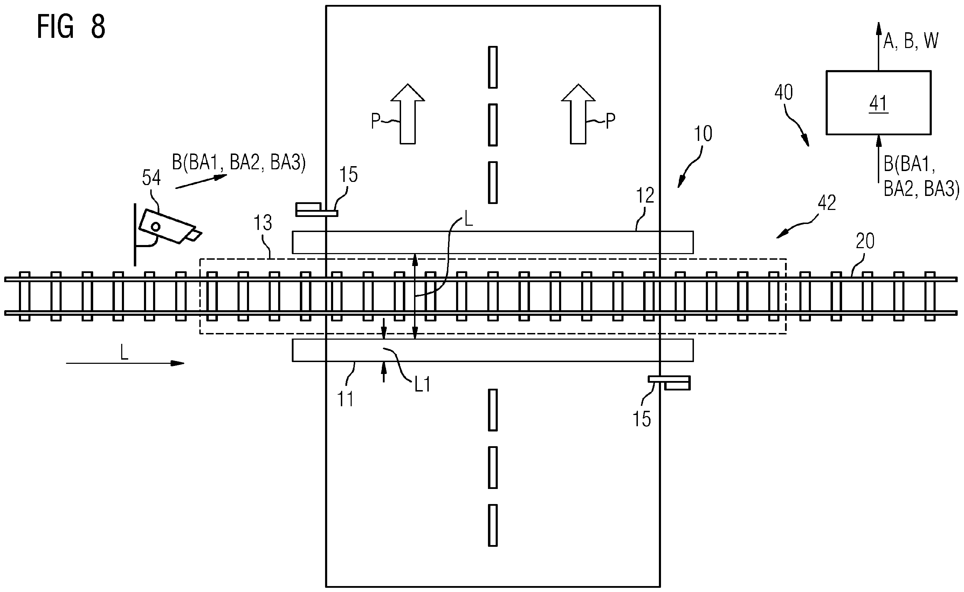

Bei dem Ausführungsbeispiel gemäß den Figuren 1 bis 7 umfasst die Bildaufnahmeeinrichtung 42 drei Kameras 51-53, sodass der Bildauswerteinrichtung 41 die Bilder B dieser drei Kameras 51-53 zum Zwecke der Objekterkennung zur Verfügung stehen. Alternativ kann vorgesehen sein, dass die Bildaufnahmeeinrichtung 42 lediglich eine einzige Kamera 54 umfasst, deren Bilder B den Gefahrenbereich 13 und die beiden Absicherungsbereiche 11 und 12 zeigen. In dem letztgenannten Fall, der in der Figur 8 gezeigt ist, wird die Bildauswerteinrichtung 41 die jeweiligen Bildabschnitte, also einen den ersten Absicherungsbereich 11 zeigenden Bildabschnitt BA1 der Bilder B zur Objekterkennung im ersten Absicherungsbereich 11, einen den zweiten Absicherungsbereich 12 zeigenden Bildabschnitt BA2 der Bilder B zur Objekterkennung im zweiten Absicherungsbereich 12, und einen den Gefahrenbereich 13 zeigenden Bildabschnitt BA3 der Bilder B3 zur Objekterkennung im Gefahrenbereich 13 auswerten.

Unabhängig von der Anzahl der Kameras ist es vorteilhaft, wenn die Überwachungseinrichtung 40 für jedes den ersten Absicherungsbereich 11 passierende Objekt 30 jeweils die Passiergeschwindigkeit ermittelt. Die Überwachungseinrichtung 40 kann die Passiergeschwindigkeit beispielsweise errechnen gemäß:

$$V = L11 / (Ti - To)$$

wobei Ti den Zeitpunkt des Eindringens des Objekts in den ersten Absicherungsbereich 11 bezeichnet, To den Zeitpunkt des Verlassens des Objekts aus dem ersten Absicherungsbereich 12 bezeichnet, L11 die Länge des ersten Absicherungsbereichs 11 entlang der Passierrichtung P gesehen bezeichnet und V die Geschwindigkeit bezeichnet.

Anhand der ermittelten Geschwindigkeit V berechnet die Überwachungseinrichtung 40 ein Zeitfenster, in dem ein Passierereignis im zweiten Absicherungsbereichs 12 erfasst werden müsste, beispielsweise gemäß:

$$(V * L) - Tt < dT < (V * L) + Tt$$

wobei dT das Zeitfenster, L den räumlichen Abstand zwischen dem - entlang der Passierrichtung P gesehen - Ende des ersten Absicherungsbereichs 11 und dem Anfang des zweiten Absicherungsbereichs 12 und Tt einen Toleranzwert bezeichnet.

Wenn die Überwachungseinrichtung 40 innerhalb des Zeitfensters dT - unter Einbezug des vorgegebenen zeitlichen Toleranzwerts Tt - kein Passierereignis im zweiten Absicherungsbereich 12 erfasst, so erzeugt sie vorzugsweise ebenfalls ein Warnsignal W.

Auch kann die Überwachungseinrichtung 40 als Warnsignal W ein Fehlersignal erzeugen, wenn die Differenz zwischen den Zählerständen eine vorgegebene Schwelle überschreitet. Diese Fehlersignalerzeugung geht von dem Gedanken aus, dass die Anzahl der Objekte, die sich in dem Gefahrenbereich 13 befinden können, allein aus Platzgründen begrenzt ist, sodass eine zu hohe Zählerstandsdifferenz zu jedem Zeitpunkt, also unabhängig vom Schließzustand der Schranken 15, auf ein technisches Problem hindeutet.

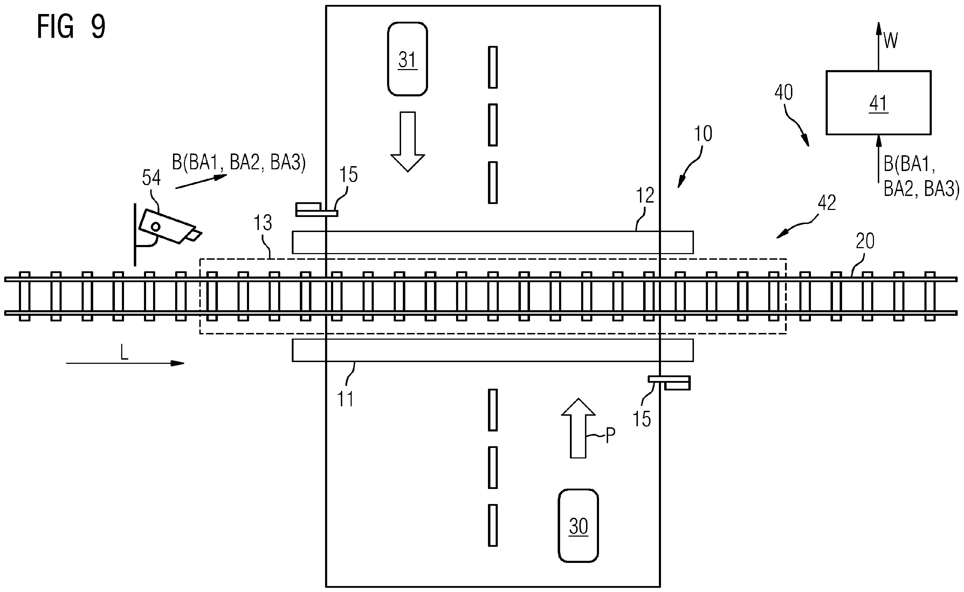

In der Figur 9 ist beispielhaft eine zweispurige Straße gezeigt, die auf einer ersten, in der Figur 9 rechten Fahrspur bestimmungsgemäß entlang der Passierrichtung P gemäß Figur 1 und auf einer zweiten, in der Figur 9 linken Fahrspur bestimmungsgemäß entgegen der Passierrichtung P befahrbar ist.

Um die oben beschriebene Plausibilitätsprüfung mit nur einem Absicherungsbereich 11 - entlang der Passierrichtung P gesehen - vor dem Gefahrenbereich 13 und nur einem Absicherungsbereich 12 hinter dem Gefahrenbereich 13 zu ermöglichen, wertet die Überwachungseinrichtung 40 die Passierereignisse jeweils auch richtungsabhängig aus.

Beispielsweise kann die Überwachungseinrichtung 40 einen ersten Nettozählerstand erzeugen, der die über den ersten Absicherungsbereich 11 in den Gefahrenbereich 13 hineingelangten Objekte abzüglich der über den zweiten Absicherungsbereich 12 aus dem Gefahrenbereich 13 herausgelangten Objekte angibt. In entsprechender Weise kann die Überwachungseinrichtung 40 einen zweiten Nettozählerstand erzeugen, der die über den zweiten Absicherungsbereich 12 in den Gefahrenbereich 13 hineingelangten Objekte abzüglich der über den ersten Absicherungsbereich 11 aus dem Gefahrenbereich 13 herausgelangten Objekte angibt.

Falls sich tatsächlich keine Objekte in dem Gefahrenbereich 13 befinden, müssen die beiden Nettozählerstände jeweils Null betragen.

Beträgt einer der Nettozählerstände jedoch nicht Null, so muss die Gefahrenbereichsüberwachung zumindest ein Objekt 30 in dem Gefahrenbereich 13 anzeigen; ist dies nicht der Fall, so liegt ein Fehler vor und es wird ein Warnsignal W erzeugt, vorzugsweise unabhängig vom Zeitpunkt, aber zumindest dann, wenn die beschriebene Situation nach einem Schließen der Schranken 15 festgestellt wird.

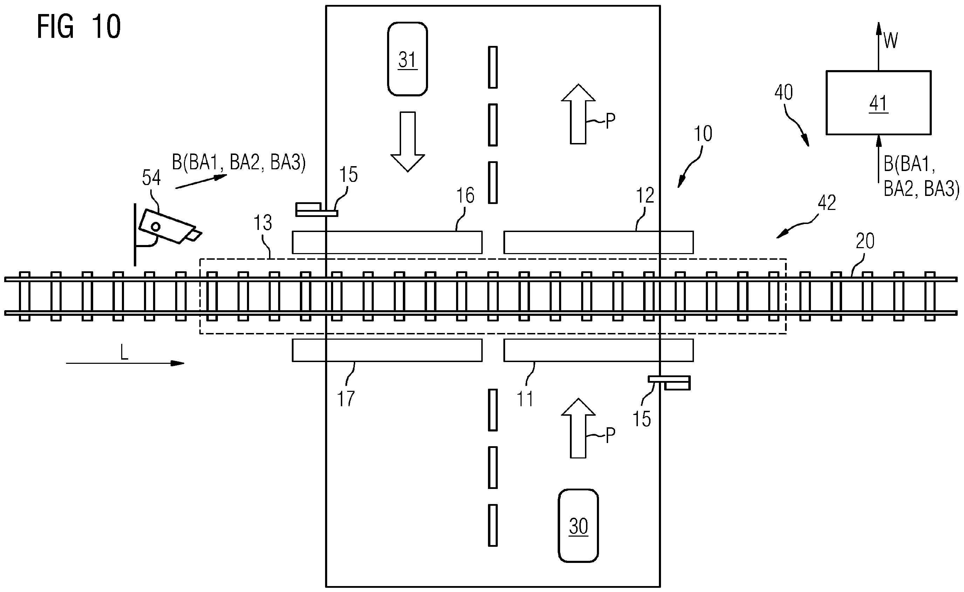

In der Figur 10 ist beispielhaft eine zweispurige Straße gezeigt, die auf einer ersten, in der Figur 10 linken Fahrspur bestimmungsgemäß entlang der Passierrichtung P gemäß Figur 1 und auf einer zweiten, in der Figur 10 rechten Fahrspur bestimmungsgemäß entgegen der Passierrichtung befahrbar ist und bei der jede der beiden Fahrspuren jeweils mit einem Paar an Absicherungsbereichen ausgestattet ist.

Die erste Passierspur ist mit dem ersten und zweiten Absicherungsbereich 11, 12 ausgestattet; diesbezüglich wird die Absicherung der Gefahrenraumüberwachung des Gefahrenbereichs 13 durchgeführt, wie dies oben im Zusammenhang mit den Figuren 1 bis 9 mit oder ohne Richtungserkennung der Bewegungsrichtung der Objekte erläutert wurde.

Die zweite Passierspur ist mit einem dritten und vierten Absicherungsbereich 16 und 17 ausgestattet; diesbezüglich wird die Absicherung der Gefahrenraumüberwachung durchgeführt, wie dies oben im Zusammenhang mit dem ersten und zweiten Absicherungsbereich 11 und 12 bzw. den Figuren 1 bis 9 (mit oder ohne Richtungserkennung der Bewegungsrichtung der Objekte) erläutert wurde; dabei gelten die obigen Erläuterungen im Zusammenhang mit dem ersten Absicherungsbereich 11 analog für den dritten Absicherungsbereich 16 und die obigen Erläuterungen im Zusammenhang mit dem zweiten Absicherungsbereich 12 analog für den vierten Absicherungsbereich 17.

Für jedes Paar an Absicherungsbereichen 11 und 12 bzw. 16 und 17 kann jeweils eine richtungsabhängige Bewegungserkennung unter Bildung von Nettozählerständen durchgeführt werden, wie dies oben erläutert worden ist.

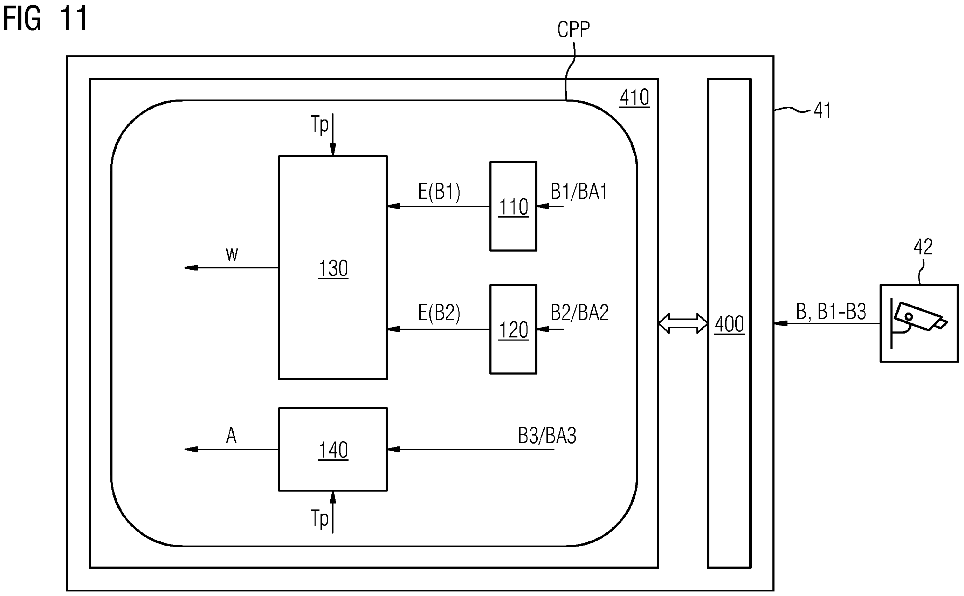

Die Figur 11 zeigt ein Ausführungsbeispiel für eine Überwachungseinrichtung 40, die zur Durchführung des im Zusammenhang mit den Figuren 1 bis 10 beschriebenen Überwachungsverfahrens geeignet ist, sowie deren Bildauswerteinrichtung 41 näher im Detail. Die Bildauswerteinrichtung 41 verarbeitet digitale Bilder einer digital arbeitenden Bildaufnahmeeinrichtung 42.

Die Bildauswerteinrichtung 41 umfasst eine Recheneinrichtung 400 und einen Speicher 410. In dem Speicher 410 ist ein Computerprogrammprodukt CPP abgespeichert, dessen Programmbefehle bei Ausführung durch die Recheneinrichtung 400 die Arbeitsweise der Recheneinrichtung 400 und damit die der Bildauswerteinrichtung 41 bestimmen oder zumindest mitbestimmen.

Das Computerprogrammprodukt CPP umfasst ein erstes Objekterkennungsmodul 110, das zur Objekterkennung in den Bildern B1 der ersten Kamera 51 gemäß Figur 1 oder in dem den ersten Absicherungsbereich 11 zeigenden Bildabschnitt BA1 der Bilder B der Kamera 54 gemäß den Figuren 8 bis 10 ausgebildet ist. Sobald das erste Objekterkennungsmodul 110 ein Objekt im ersten Absicherungsbereich 11 erkennt und dieses den ersten Absicherungsbereich 11 wieder verlässt, so erzeugt das Objekterkennungsmodul 110 eine Passierereignismeldung E, die ein Passierereignis im ersten Absicherungsbereich 11 anzeigt.

Um solche Passierereignismeldungen E zu vermeiden, wenn ein Objekt von außerhalb des Bereichs des Bahnübergangs 10 in den ersten Absicherungsbereich 11 eindringt und diesen wieder nach außen, also nicht in Richtung des Gefahrenbereichs 13, verlässt, kann eine bewegungsabhängige Objekterkennung vorgesehen sein, und die Erzeugung von Passierereignismeldungen E kann auf solche Fälle beschränkt werden, in denen ein erkanntes Objekt den ersten Absicherungsbereich 11 in Richtung des Gefahrenbereichs 13 verlässt. Die Passierereignismeldungen E werden zu einem nachgeordneten Auswertmodul 130 des Computerprogrammprodukts CPP weitergeleitet.

Das Computerprogrammprodukt CPP umfasst außerdem ein zweites Objekterkennungsmodul 120, das zur Objekterkennung in den Bildern B2 der zweiten Kamera 52 gemäß Figur 1 oder in dem den zweiten Absicherungsbereich 12 zeigenden Bildabschnitt BA2 der Bilder der Kamera 54 gemäß den Figuren 8-10 ausgebildet ist. Sobald das zweite Objekterkennungsmodul 120 ein Objekt erkennt und dieses den zweiten Absicherungsbereich 12 wieder verlässt, so erzeugt das zweite Objekterkennungsmodul 120 eine Passierereignismeldung E, die ein Passierereignis im zweiten Absicherungsbereich 12 anzeigt. Um solche Passierereignismeldungen E zu vermeiden, wenn ein Objekt von außerhalb des Bereichs des Bahnübergangs 10 in den zweiten Absicherungsbereich 12 eindringt und diesen wieder nach außen, also nicht in Richtung des Gefahrenbereichs 13, verlässt, kann eine bewegungsabhängige Objekterkennung vorgesehen sein und die Erzeugung von Passierereignismeldungen E kann auf solche Fälle beschränkt werden, in denen ein erkanntes Objekt vom Gefahrenbereich 13 kommend den zweiten Absicherungsbereich 12 in Richtung des Gefahrenbereichs 13 verlässt. Die Passierereignismeldungen E des zweiten Objekterkennungsmoduls 120 werden zu dem nachgeordneten Auswertmodul 130 weitergeleitet.

Das Auswertmodul 130 vergleicht die Anzahl der Passierereignismeldungen E des ersten Objekterkennungsmoduls 110 mit denen des zweiten Objekterkennungsmoduls 120 und erzeugt ein Warnsignal W, wenn die Differenz zwischen den Anzahlen zu einem vorgegebenen Prüfzeitpunkt Tp ungleich Null ist. Der vorgegebene Prüfzeitpunkt Tp ist beispielsweise ein Zeitpunkt nach einem Schließen der Schranken 15 des Bahnübergangs 10 oder ein Zeitpunkt nach einer ein Passierverbot des Bahnübergangs 10 anzeigenden Verbotsanzeige, also mit anderen Worten ein Zeitpunkt, zu dem sich bei einem korrekten Betriebsablauf keine Objekte im Gefahrenbereich 13 bzw. zwischen dem ersten und zweiten

7

Absicherungsbereich 11 und 12 mehr befinden dürfen.

Zusätzlich kann das Auswertmodul 130 auch zu einem beliebigen anderen Zeitpunkt ein Warnsignal zu erzeugen, wenn die Differenz zwischen den Zählerständen, konkret die Differenz zwischen der Anzahl der im ersten und zweiten Absicherungsbereich 11 bzw. 12 erkannten Passierereignisse, eine vorgegebene Schwelle, die größer als Null ist, überschreitet. Die Schwelle entspricht vorzugsweise der Anzahl an Objekten, die bei einem normalen Betriebsablauf maximal im Bereich des Bahnübergangs 10 zu erwarten ist. Die Schwelle kann beispielsweise zehn betragen.

Alternativ oder zusätzlich kann das Auswertmodul 130 dazu programmiert sein, für jedes den ersten Absicherungsbereich 11 passierende Objekt 30 jeweils die Passiergeschwindigkeit zu ermitteln, anhand der ermittelten Geschwindigkeit ein Zeitfenster zu berechnen, in dem ein Passierereignis des zweiten Absicherungsbereichs 12 erfasst werden müsste, und als Warnsignal ein Fehlersignal zu erzeugen, wenn innerhalb des Zeitfensters kein Passierereignis im zweiten Absicherungsbereich 12 erfasst wird.

Das Computerprogrammprodukt CPP umfasst außerdem ein drittes Objekterkennungsmodul 140, das zur Objekterkennung in den Bildern B3 der dritten Kamera 53 gemäß Figur 1 oder in dem den Gefahrenbereich 13 zeigenden Bildabschnitt BA3 der Bilder der Kamera 54 gemäß den Figuren 8-10 ausgebildet ist. Erkennt das dritte Objekterkennungsmodul 140 zu dem genannten Prüfzeitpunkt, zu dem kein Objekt erkannt werden dürfte, weil der Bahnübergang 10 geschlossen ist, dennoch ein Objekt im Gefahrenbereich 13, so erzeugt das dritte Objekterkennungsmodul 140 ein Alarmsignal A.

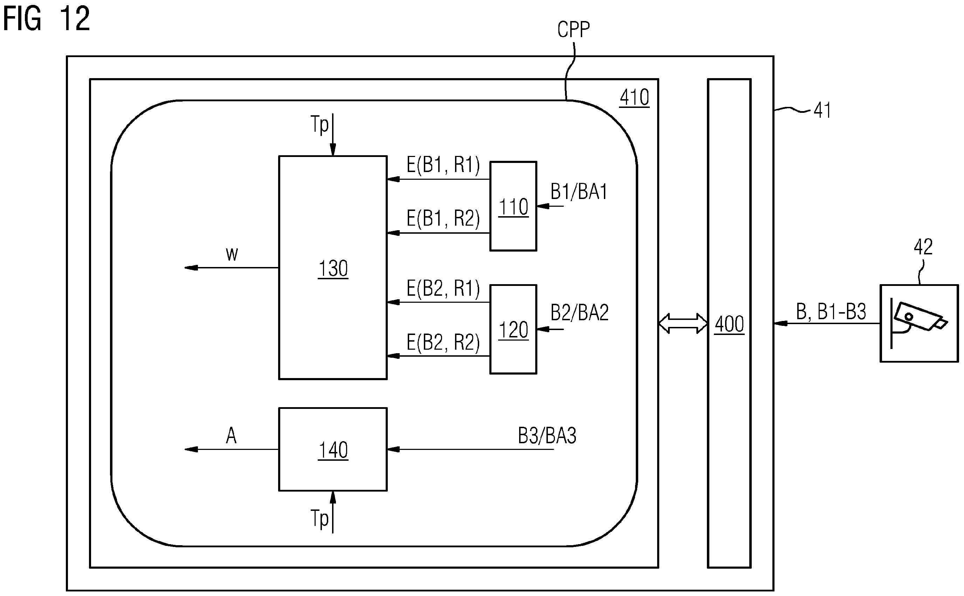

Die Figur 12 zeigt ein weiteres Ausführungsbeispiel für eine Bildauswerteinrichtung 41, die zur Durchführung des im Zusammenhang mit den Figuren 1 bis 10 beschriebenen Überwachungsverfahrens geeignet ist. Bei dem Ausführungsbeispiel gemäß Figur 12 erfassen das erste und zweite Objekterkennungsmodul 110 und 120 die Passierereignisse jeweils richtungsabhängig und melden jedes Passierereignis mit einer die jeweilige Passierrichtung angebenden Richtungsangabe R1 bzw. R2. Die Richtungsangabe R1 gibt dabei eine Bewegung entlang der Passierrichtung P in Figur 1 und die Richtungsangabe R2 eine Bewegung entgegen dieser Passierrichtung P an.

Das Auswertmodul 130 vergleicht die Anzahl der Passierereignismeldungen E des ersten Objekterkennungsmoduls 110, die die Richtungsangabe R1 aufweisen, mit denen des zweiten Objekterkennungsmoduls 120, die dieselbe Richtungsangabe R1 aufweisen, und erzeugt ein Warnsignal W, wenn die Differenz zwischen diesen zu dem vorgegebenen Prüfzeitpunkt Tp ungleich Null ist oder zu einem beliebigen anderen Zeitpunkt die oben genannte Schwelle von beispielsweise zehn überschreitet.

In entsprechender Weise verarbeitet das Auswertmodul 130 die Passierereignismeldungen E des ersten und zweiten Objekterkennungsmoduls 110 und 120, die die Richtungsangabe R2 aufweisen, und erzeugt ein Warnsignal W, wenn die Differenz zwischen diesen zu dem vorgegebenen Prüfzeitpunkt Tp ungleich Null ist oder zu einem beliebigen anderen Zeitpunkt die oben genannte Schwelle von beispielsweise zehn überschreitet.

Im Übrigen gelten die obigen Erläuterungen im Zusammenhang mit dem Ausführungsbeispiel gemäß Figur 11 für das Ausführungsbeispiel gemäß Figur 12 entsprechend.

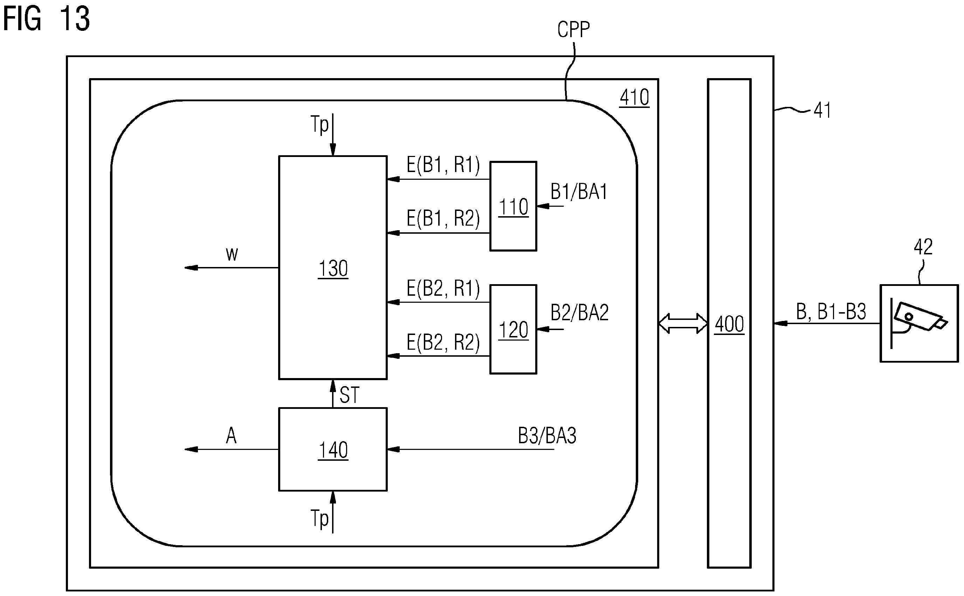

Auch kann die Durchführung einer Plausibilitätsprüfung von dem Auswertmodul 130 mittels eines Steuersignals ST ausgelöst werden (siehe Figur 13). Beispielsweise kann das Auswertmodul 130 jeweils ein Steuersignal ST auslösen, wenn es feststellt, dass der Gefahrenbereich 13 frei ist.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechteridentität mit umfasst.

Bezugszeichenliste

| | |
|---|---|
| 10 | Bahnübergang |
| 11-12 | Absicherungsbereiche |
| 13 | Gefahrenbereich |
| 15 | Schranke |
| 16-17 | Absicherungsbereiche |
| 20 | Gleisanlagenbereich |
| 30 | Objekt |
| 31 | Objekt |
| 40 | Überwachungseinrichtung |

| 41 | Bildauswerteinrichtung |
|----|----|
| 42 | Bildaufnahmeeinrichtung |
| 51-54 | Kameras |
| 60 | Schienenfahrzeug |
| 110 | Objekterkennungsmodul |
| 120 | Objekterkennungsmodul |
| 140 | Objekterkennungsmodul |
| 130 | Auswertmodul |
| 400 | Recheneinrichtung |
| 410 | Speicher |

| A | Alarmsignal |
|----|----|
| B | Bilder |
| B1-B3 | Bilder |
| BA1-BA3 | Bildabschnitt |
| BS | Bestätigungssignal |
| CPP | Computerprogrammprodukt |
| E | Passierereignismeldung |
| L | Schienenlängsrichtung |
| P | Passierrichtung |
| R1 | Richtungsangabe |
| R2 | Richtungsangabe |
| ST | Steuersignal |
| Tp | Prüfzeitpunkt |
| W | Warnsignal |

**Patentansprüche**

1. Verfahren zum Überwachen eines Bahnübergangs (10), dessen von Schienenfahrzeugen (60) befahrbarer Gleisanlagenbereich (20) von Objekten (30, 31) entlang einer Passierrichtung (P) überquerbar ist,
**dadurch gekennzeichnet, dass**

- ein entlang der Passierrichtung (P) vor dem Gleisanlagenbereich (20) liegender erster Absicherungsbereich (11) auf Passierereignisse hin überwacht wird,
- ein entlang der Passierrichtung (P) hinter dem Gleisanlagenbereich (20) liegender zweiter Absicherungsbereich (12) auf Passierereignisse hin überwacht wird, und
- zumindest ein Warnsignal (W) erzeugt wird, wenn die erkannten Passierereignisse gemäß zumindest einer vorgegebenen Plausibilitätsprüfung unplausibel sind.

2. Verfahren nach Anspruch 1,
**dadurch gekennzeichnet, dass**
im Rahmen der Plausibilitätsprüfung oder einer der Plausibilitätsprüfungen als das Warnsignal (W) ein Zählerstandswarnsignal erzeugt wird, wenn zu einem vorgegebenen Prüfzeitpunkt (Tp) die Anzahl der erkannten Passierereignisse des ersten Absicherungsbereichs (11) von der Anzahl der erkannten Passierereignisse des zweiten Absicherungsbereichs (12) abweicht.

3. Verfahren nach Anspruch 1 oder 2,
**dadurch gekennzeichnet, dass**
im Rahmen der Plausibilitätsprüfung oder einer der Plausibilitätsprüfungen die Passierereignisse jeweils richtungsabhängig gezählt werden, als das Warnsignal (W) ein Zählerstandswarnsignal erzeugt wird, wenn zu einem vorgegebenen Prüfzeitpunkt (Tp) die Anzahl der Objekte, die sich in Richtung auf den Gleisanlagenbereich (20) bewegt haben, von der Anzahl der Objekte, die sich von dem Gleisanlagenbereich (20) wegbewegt haben, abweicht.

4. Verfahren nach einem der voranstehenden Ansprüche,
**dadurch gekennzeichnet, dass**
im Rahmen der Plausibilitätsprüfung oder einer der Plausibilitätsprüfungen die Passierereignisse jeweils richtungsabhängig gezählt werden, und zwar unter Bildung

- eines ersten Zählerstands, der die Anzahl der Passierereignisse des ersten Absicherungsbereichs (11) entlang der Passierrichtung (P) angibt,
- eines weiteren ersten Zählerstands, der die Anzahl der Passierereignisse des ersten Absicherungsbereichs (11) entgegen der Passierrichtung (P) angibt,
- eines zweiten Zählerstands, der die Anzahl der Passierereignisse des zweiten Absicherungsbereichs (12) entlang der Passierrichtung (P) angibt,
- eines weiteren zweiten Zählerstands, der die Anzahl der Passierereignisse des zweiten Absicherungsbereichs (12) entgegen der Passierrichtung (P) angibt, und
- als das Warnsignal (W) ein Zählerstandswarnsignal erzeugt wird, wenn zu einem vorgegebenen Prüfzeitpunkt (Tp) die Differenz zwischen dem ersten Zählerstand und dem zweiten Zählerstand ungleich Null ist und/oder die Differenz zwischen dem ersten weiteren und dem zweiten weiteren Zählerstand ungleich Null ist.

5. Verfahren nach einem der voranstehenden Ansprüche,
   **dadurch gekennzeichnet, dass**
   der vorgegebene Prüfzeitpunkt (Tp) ein Zeitpunkt ist, der vor einem erwarteten oder geplanten Befahren des Gleisanlagenbereichs (20) durch ein Schienenfahrzeug (60) liegt.

6. Verfahren nach einem der voranstehenden Ansprüche,
   **dadurch gekennzeichnet, dass**

   - sich der erste Absicherungsbereich (11) zwischen dem Gleisanlagenbereich (20) und einer entlang der Passierrichtung (P) gesehen vor dem Gleisanlagenbereich (20) befindlichen Schranke (15) oder Sperrmarkierung befindet und
   - sich der zweite Absicherungsbereich (12) zwischen dem Gleisanlagenbereich (20) und einer entlang der Passierrichtung (P) gesehen hinter dem Gleisanlagenbereich (20) befindlichen Schranke (15) oder Sperrmarkierung befindet.

7. Verfahren nach einem der voranstehenden Ansprüche,
   **dadurch gekennzeichnet, dass**

   - für jedes den ersten Absicherungsbereich (11) passierende Objekt (30, 31) jeweils die Passiergeschwindigkeit ermittelt wird,
   - anhand der ermittelten Geschwindigkeit ein Zeitfenster berechnet wird, in dem ein Passierereignis des zweiten Absicherungsbereichs (12) erfasst werden müsste, und
   - als das Warnsignal (W) ein Fehlersignal erzeugt wird, wenn innerhalb des Zeitfensters kein Passierereignis des zweiten Absicherungsbereichs (12) erfasst wird.

8. Verfahren nach einem der voranstehenden Ansprüche,
   **dadurch gekennzeichnet, dass**
   im Rahmen der Plausibilitätsprüfung oder einer der Plausibilitätsprüfungen als das Warnsignal (W) ein Fehlersignal erzeugt wird, wenn die Differenz zwischen der Anzahl der im ersten und zweiten Absicherungsbereich erkannten Passierereignisse eine vorgegebene Schwelle überschreitet.

9. Verfahren nach einem der voranstehenden Ansprüche,
   **dadurch gekennzeichnet, dass**

   - der Bahnübergang (10) für die Überquerung des Gleisanlagenbereichs entlang der Passierrichtung (P) zumindest eine erste Passierspur und für die Überquerung des Gleisanlagenbereichs entgegen der Passierrichtung (P) zumindest eine zweite Passierspur aufweist,
   - der erste und zweite Absicherungsbereich (11, 12) der ersten Passierspur zugeordnet ist,
   - ein dritter Absicherungsbereich (16) der zweiten Passierspur zugeordnet ist, entgegen der Passierrichtung (P) vor dem Gleisanlagenbereich (20) liegt und auf Passierereignisse hin überwacht wird,
   - ein vierter Absicherungsbereich (17) der zweiten Passierspur zugeordnet ist, entgegen der Passierrichtung (P) hinter dem Gleisanlagenbereich (20) liegt und auf Passierereignisse hin überwacht wird, und
   - zumindest ein Warnsignal (W) erzeugt wird, wenn die erkannten Passierereignisse gemäß zumindest einer vorgegebenen Plausibilitätsprüfung unplausibel sind.

10. Verfahren nach Anspruch 9,

**dadurch gekennzeichnet, dass**

- im Rahmen der Plausibilitätsprüfung oder einer der Plausibilitätsprüfungen die Passierereignisse jeweils gezählt werden unter Bildung eines dritten Zählerstands, der die Anzahl der Passierereignisse des dritten Absicherungsbereichs (16) angibt, und eines vierten Zählerstands, der die Anzahl der Passierereignisse des vierten Absicherungsbereichs (17) angibt, und als das Warnsignal (W) ein Zählerstandswarnsignal erzeugt wird, wenn zu einem vorgegebenen Prüfzeitpunkt (Tp) die Differenz zwischen dem dritten Zählerstand und dem vierten Zählerstand ungleich Null ist und/oder

- für jedes den dritten Absicherungsbereich (16) passierende Objekt (30, 31) jeweils die Passiergeschwindigkeit ermittelt wird, anhand der ermittelten Geschwindigkeit ein Zeitfenster berechnet wird, in dem ein Passierereignis des vierten Absicherungsbereichs (17) erfasst werden müsste, und als das Warnsignal (W) ein Fehlersignal erzeugt wird, wenn innerhalb des Zeitfensters kein Passierereignis des vierten Absicherungsbereichs erfasst wird, und/oder

- im Rahmen der Plausibilitätsprüfung oder einer der Plausibilitätsprüfungen als das Warnsignal (W) ein Fehlersignal erzeugt wird, wenn die Differenz zwischen dem dritten und dem vierten Zählerstand eine vorgegebene Schwelle überschreitet.

11. Verfahren nach einem der voranstehenden Ansprüche 9 bis 10,
**dadurch gekennzeichnet, dass**
sich der dritte Absicherungsbereich (16) zwischen dem Gleisanlagenbereich (20) und einer in der Passierrichtung (P) hinter dem Gleisanlagenbereich (20) befindlichen Schranke (15) oder Sperrmarkierung befindet und sich der vierte Absicherungsbereich (17) zwischen dem Gleisanlagenbereich (20) und einer in der Passierrichtung (P) vor dem Gleisanlagenbereich (20) befindlichen Schranke (15) oder Sperrmarkierung befindet.

12. Verfahren nach einem der voranstehenden Ansprüche,
**dadurch gekennzeichnet, dass**

- der von Schienenfahrzeugen (60) befahrbare Gleisanlagenbereich (20) im Rahmen einer Gefahrenbereichsüberwachung überwacht wird und

- die Überwachung des ersten und zweiten Absicherungsbereichs (11, 12) zum Zwecke der Absicherung der Gefahrenbereichsüberwachung durchgeführt wird,

- wobei bei Vorliegen einer Freimeldung des Gleisanlagenbereichs (20) im Rahmen der Gefahrenbereichsüberwachung ein Überprüfungssignal erzeugt wird, wenn das oder zumindest eines der Warnsignale (W) erzeugt worden ist.

13. Überwachungseinrichtung (40) zum Durchführen eines Verfahrens, insbesondere eines solchen nach einem der voranstehenden Ansprüche, zum Überwachen eines Bahnübergangs (10), dessen von Schienenfahrzeugen (60) befahrbarer Gleisanlagenbereich (20) von Objekten (30, 31) entlang einer vorgegebenen Passierrichtung (P) passierbar ist,
**dadurch gekennzeichnet, dass**
die Überwachungseinrichtung (40) aufweist,

- eine Bildaufnahmeeinrichtung (42), die Bilder eines entlang der Passierrichtung (P) vor dem Gleisanlagenbereich (20) liegenden ersten Absicherungsbereichs (11) und Bilder eines entlang der Passierrichtung (P) hinter dem Gleisanlagenbereich (20) liegenden zweiten Absicherungsbereichs (12) erzeugt, und

- eine mit der Bildaufnahmeeinrichtung (42) in Verbindung stehende Bildauswerteinrichtung (41), die dazu ausgebildet ist, die den ersten und zweiten Absicherungsbereich (11, 12) zeigenden Bilder jeweils auf Passierereignisse hin zu überwachen und zumindest ein Warnsignal (W) zu erzeugen, wenn die erkannten Passierereignisse gemäß zumindest einer vorgegebenen Plausibilitätsprüfung unplausibel sind.

14. Überwachungseinrichtung (40) nach Anspruch 13,
**dadurch gekennzeichnet, dass**
die Bildauswerteinrichtung (41) eine Recheneinrichtung (400) aufweist, die mit einem Computerprogrammprodukt (CPP) programmiert ist, das Programmbefehle umfasst, die bei Ausführung durch die Recheneinrichtung (400) diese veranlassen, die Bilder auszuwerten und die zumindest eine vorgegebenen Plausibilitätsprüfung durchzuführen.

15. Computerprogrammprodukt (CPP), insbesondere für eine Einrichtung nach Anspruch 14, **dadurch gekennzeichnet, dass**

das Computerprogrammprodukt (CPP) Programmbefehle umfasst, die bei Ausführung durch eine Recheneinrichtung (400) diese veranlassen, Bilder, die einen ersten und zweiten Absicherungsbereich eines Bahnübergangs (10) zeigen, jeweils auf Passierereignisse zu überwachen und zumindest ein Warnsignal (W) zu erzeugen, wenn die erkannten Passierereignisse gemäß zumindest einer vorgegebenen Plausibilitätsprüfung unplausibel sind.

# FIG 1

FIG 2

FIG 3

FIG 4

EP 4 620 777 A1

FIG 5

FIG 6

EP 4 620 777 A1

FIG 7

FIG 8

FIG 9

FIG 10

EP 4 620 777 A1

# FIG 11

EP 4 620 777 A1

FIG 12

FIG 13

EP 4 620 777 A1

Europäisches
Patentamt

European
Patent Office

Office européen
des brevets

## EUROPÄISCHER RECHERCHENBERICHT

**Nummer der Anmeldung**

EP 24 16 4692

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 032091 B3 (DEUTSCH ZENTR LUFT & RAUMFAHRT [DE]) 9. April 2009 (2009-04-09) | 1,5-7,9, 12-15 | INV. B61L29/30 |
| Y | * Abbildung 1 * | 11 | B61L23/04 |
| A | * Absatz [0001] * | 2-4,8,10 | |
| | * Absatz [0025] - Absatz [0030] * | | |
| | * Absatz [0032] * | | |
| | - - - - - | | |
| Y | US 2015/323663 A1 (LEHNERTZ BENEDIKT [DE]) 12. November 2015 (2015-11-12) | 11 | |
| | * Absatz [0068] - Absatz [0070] * | | |
| | * Abbildung 7 * | | |
| | - - - - - | | |

**RECHERCHIERTE SACHGEBIETE (IPC)**

B61L

Der vorliegende Recherchenbericht wurde für alle Patentansprüche erstellt

| Recherchenort | Abschlußdatum der Recherche | Prüfer |
|---|---|---|
| München | 23. August 2024 | Janssen, Axel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 24 16 4692

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-08-2024

| Im Recherchenbericht angeführtes Patentdokument | Datum der Veröffentlichung | Mitglied(er) der Patentfamilie | Datum der Veröffentlichung |
|---|---|---|---|
| DE 102007032091 B3 | 09-04-2009 | KEINE | |
| US 2015323663 A1 | 12-11-2015 | CN 105083342 A | 25-11-2015 |
| | | DE 102014208522 A1 | 12-11-2015 |
| | | US 2015323663 A1 | 12-11-2015 |

Für nähere Einzelheiten zu diesem Anhang : siehe Amtsblatt des Europäischen Patentamts, Nr. 12/82